# EUROPEAN PATENT APPLICATION

(11) **EP 3 516 996 A1**
(43) Date of publication of application: **31.07.2019**
(21) Application number: 19382048.7
(22) Date of filing: 24.01.2019
(51) Int. Cl.: A47F 5/08, B62H 3/00

(54) **FOLDING BIKE HANGER WITH ADJUSTABLE POSITION**

(30) Priority: 24.01.2018 ES 201830086 U
(71) Applicant: Reunion Industrial, S.L., 46183 Rafelbuñol / Valencia (ES)
(72) Inventor: Montesion Ambou, Jeronimo, 46183 RAFELBUÑOL / VALENCIA (ES)
(74) Representative: Maldonado Jordan, Julia

(57) **Abstract**

The present invention relates to a hanger having a foldable structure and a variable position configured from a tubular structure (1) intended for being fixed on a wall or another vertical surface, with two supporting arms (2) which, when attached together by means of an inverted U-shaped central segment (3) with the hanger in the usage position, are perpendicular to said vertical surface and parallel to one another, said structure (1) being formed by a set of sections (11, 12, 13, 14) that can be coupled to one another with linear and rotational movement in a variable position so as to vary the separating distance (d) between the arms (2), the relative height between the arms (2) so that one arm is arranged higher than the other or both arms are arranged at the same height, and the folding of the arms (2) so that they are parallel to the vertical surface or wall in which the hanger is fixed.

## Description

### Object of the Invention

As expressed in the title of the present specification, the invention relates to a hanger having a foldable structure and a variable position which provides the intended function thereof with advantages and novel features that are described in detail below and entail an improvement over the current state of the art.

More specifically, the object of the invention focuses on a hanger to be secured to a wall or another vertical surface for hanging objects, for example a bicycle, such that they are suspended at a height, the hanger having the particularity of being formed from a tubular structure which, when fixed to said wall, in addition to allowing the folding of the two perpendicular arms it comprises, also allows varying the relative position of said arms to place them at different heights or to separate them from one another, said hanger being adapted to different sizes or models of the bicycle or other objects to be hanged.

### Field of Application of the Invention

The field of application of the present invention is comprised within the sector of the industry dedicated to the manufacture of hangers, focusing particularly on the field of hangers configured as accessories for hanging objects such as bicycles.

### Background of the Invention

As a reference to the current state of the art, it must be pointed out that there are known on the market different types of hangers for bicycles and similar objects of the type herein concerned, i.e., hangers formed by a structure with at least two arms perpendicular to the wall on which they are fixed to support the bicycle thereon. Although these hangers usually fulfill the essential purpose of providing means for placing bicycles in an orderly and practical manner without taking up space on the floor, dirtying it and/or causing an inconvenience, they have the main drawback of being fixed structures, which means that they must be acquired depending on the type and size of the bicycle to be placed, and in the event of changing the bicycle, it will no longer adapt properly for the bicycle to be suitably supported with the frame in a perfectly horizontal position, leading to the need to replace it with a new hanger.

Furthermore, because they are a fixed structure, another drawback of existing hangers is that they are not foldable, so when the hanger is not used for hanging the bicycle or the object for which it is intended, the arms perpendicular to the wall on which the hanger is fixed constitute an obstruction, and in most cases even a danger, as there is a risk of someone running into said arms as they pass by them.

The objective of the present invention is therefore to provide the market with an improved hanger the structure of which prevents the aforementioned drawbacks of current hangers, with the need to indicate that the applicant is nonetheless unaware of the existence of any such hanger having technical, structural, and constitutive features identical or similar to the features of the hanger herein claimed.

### Summary of the Invention

The hanger having a foldable structure and a variable position proposed by the invention is therefore configured as a novelty within its field of application, since the objectives indicated above are specifically and satisfactorily achieved based on its implementation, and the characterizing details thereof which make it possible and which distinguish it are conveniently included in the final claims accompanying the present description.

More specifically, as indicated above the invention proposes a hanger to be secured to a wall or another vertical surface for hanging objects such that they are suspended at a height, with one of the applications being the hanging of a bicycle, said hanger being different from other similar hangers existing on the market due to the tubular structure with which it is formed, in which there are contemplated two arms perpendicular to the wall on which it is secured, said hanger being configured such that, on one hand, it allows folding said arms so that they are arranged parallel to the wall and therefore do not constitute protruding elements which cause an obstruction or constitute a risk of someone running into same, and on the other hand, it also allows varying the relative position of said arms with respect to one another, both for placing them at different heights with respect to one another and for varying the separating distance between them, so the hanger provides the advantage of being able to adapt to different sizes or models of bicycle and other objects to enable hanging them with the frame in a horizontal position without having to replace the hanger with another one.

In that sense, in the preferred embodiment said structure of the hanger comprises two support arms that are attached together by a U-shaped central segment and adapt to different heights and relative separations between both to enable keeping a bicycle in a horizontal position. As is known, there are a plethora of bicycle frame models and sizes on the market, and therefore in order to adapt to these models and sizes and keep the bicycle/bicycles in a horizontal position or riding position, supports that adapt to different heights are required.

Another important feature of this structure of the hanger is the possibility of folding same when it is not holding any object, with the hanger being arranged in a position that takes up minimal space.

The regulation of all the positions of the arms, such as the height, separation, and folded position of the support arms, is performed without requiring any tool, and being mechanically fixed in all the positions.

To that end, the tubular structure, which is usually fixed to a wall or a vertical surface, is formed by several tubular segments of different diameters, which enable linear movement between same and therefore the adaptation thereof to different measurements.

More specifically, the structure is made up of four 90° or L-shaped bent tube sections, two upper sections which are attached together forming between the arms the central attachment segment having an inverted U-shape when seen from the front part, and said sections are attached by means of a difference in diameters between the respective horizontal tubes, allowing a telescopic movement between both sections and therefore the difference in width or distance between the arms, in the case of a bicycle, for adapting to the length of the frame, and two lower sections which are attached to each of the upper sections in the lower portion thereof and determine the respective arms.

For fixing the two upper sections in order to fix the separation between both arms, the existence of holes perpendicular to the surface of installation through which screws are inserted, fixing the tubes to the wall, is preferably contemplated. Once this regulation and the fixing thereof have been performed, this regulation would be fixed and it would be necessary to disassemble the hanger and again fix it in another position to vary same.

In turn, the two lower tube sections comprising respective support arms are adapted to different heights by a difference in diameters between the tube thereof which is inserted in the tube of the respective upper sections, identical to same for regulating the separation between them, with each in turn being formed by an L-shaped part where one vertical branch is coupled to the two vertical tubes of the vertical sections and the horizontal branch defines each of the two support arms.

Like the foregoing, these tubes slide in a telescopic manner to adapt to the differences in heights and to enable being adjusted to different bicycle frames. The positions are preferably fixed in this case by a snap-fit mechanical system comprising lugs in the inner tubes and holes in the outer tubes, fixing the positions of the different configurations, including the folding positions, where they can be varied without having to disassemble the hanger from its fixing to the wall.

In the last folding position, all the tubes determining the arms are arranged on the same plane parallel to the plane of the wall or surface of installation.

Finally, it must be highlighted that additionally the structure also has fixing means, such as an arch-shaped metal rod, a flat, which can have a different section and diameter, being part of the same structure as it is welded thereto, or another element defining a through cavity the purpose of which is to enable inserting therethrough an anti-theft security system which will also be fastened to the bicycle frame, with the bicycle being secured to the structure to prevent theft or robbery.

Based on the foregoing, the hanger of the invention provides a number of advantages given that each arm is foldable; each arm can be independently adjusted; the height and separation of each arm can be adjusted; and since each arm can be independently adjusted, the frame can be successfully arranged in a horizontal position regardless of its shape when hanging the bicycle.

The described hanger having a foldable structure and a variable position therefore represents an innovation having structural and constitutive features that have been unknown up until now, and these reasons, combined with its practical usefulness, provide sufficient grounds for granting the exclusive right that is sought.

### Description of the Drawings

To complement the description that is being made and for the purpose aiding to better understand the features of the invention, a set of drawings is attached to the present specification as an integral part thereof in which the following has been depicted with an illustrative and non-limiting character:
Figures 1, 2, 3, and 4 show a top plan view, a perspective view, a front elevational view, and a side elevational view, respectively, of an embodiment of the hanger having a foldable structure and a variable position, object of the invention, where the main parts and elements it comprises, as well as the configuration and arrangement thereof, can be seen.
Figures 5 and 6 show respective front and side elevational views, respectively, of the example of the hanger according to the invention shown in Figure 1, in this case with one of the arms depicted at a different height with respect to the other different from that shown in said Figure 1, specifically said difference in height between both arms being smaller in this case.
Figures 7 and 8 show respective front and side elevational views, respectively, of the example of the hanger of the invention shown in Figure 1, in this case depicted with both arms at the same height.
Figures 9 and 10 show respective front and side elevational views, respectively, of the example of the hanger according to the invention shown in Figure 1, in this case depicted with both arms separated from one another at a greater distance than that in said Figure 1 and Figures 3 to 8.
Figures 11 and 12 show respective front and side elevational views, respectively, of the example of the hanger of the invention shown in the preceding figures, in this case depicted with the arms in the folded position.
Figure 13 shows an exploded perspective view of the hanger of the invention, showing the four tube segments that can be telescopically coupled, forming the structure of the hanger, which allow the folding of the hanger and varying its relative position.
Figure 14 shows an enlarged view of detail A indicated in Figure 2, which allows observing the rod it incorporates as an example of fixing means for fixing to a security system the hanger of the invention has.

### Preferred Embodiment of the Invention

In view of the mentioned drawings and according to the reference numbers used, a non-limiting embodiment of the hanger having a foldable structure and a variable position of the invention can be seen therein, which hanger comprises the parts and elements that are indicated and described in detail below.

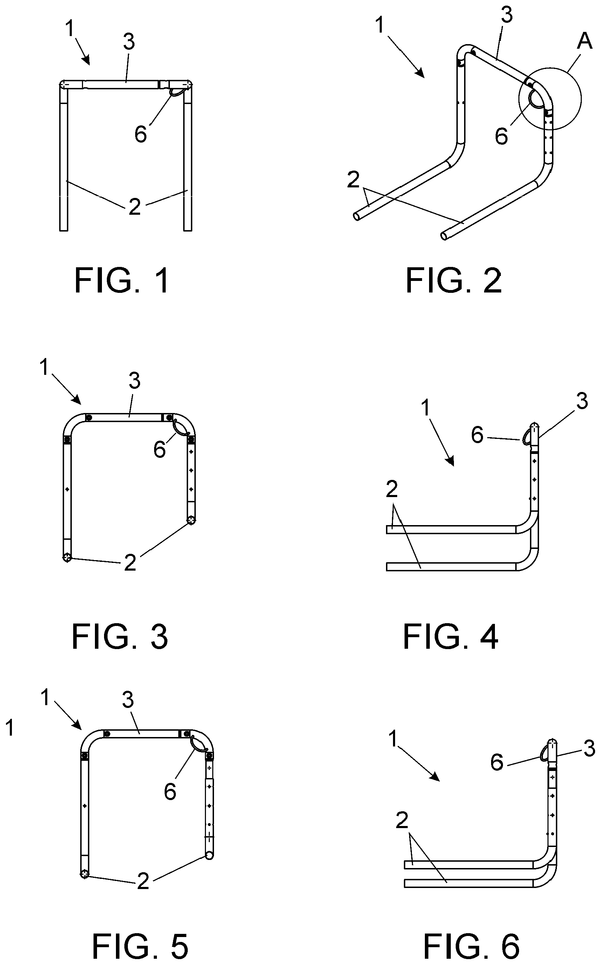

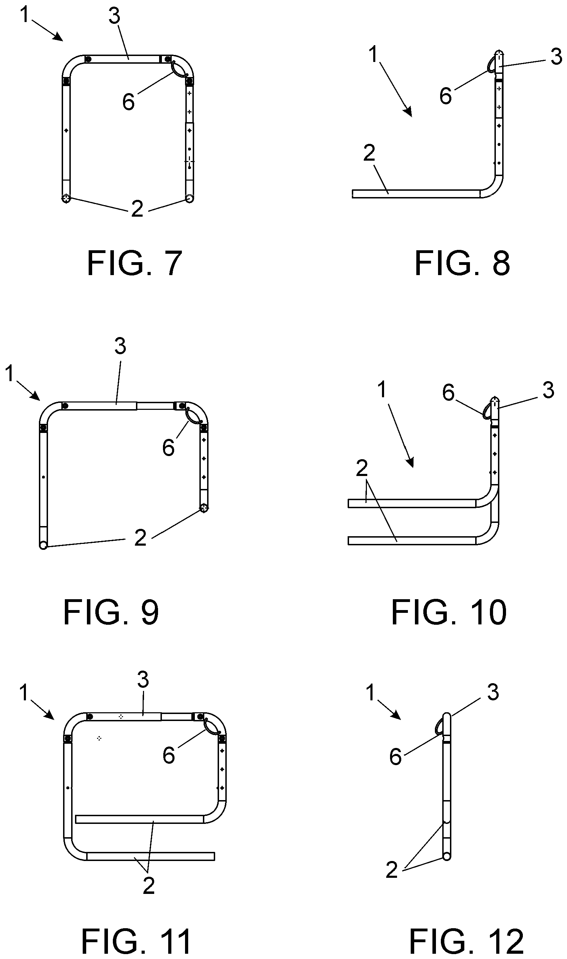

In that sense, as seen in said Figure 1, the hanger at hand is configured from a tubular structure (1) intended for being fixed on a wall or another vertical surface, comprising two supporting arms (2) which, when attached together by means of an inverted U-shaped central segment (3) with the hanger in the usage position, are perpendicular to said vertical surface and parallel to one another, said structure (1) being formed by a set of sections (11, 12, 13, 14) that can be coupled to one another with linear and rotational movement in a variable position so as to enable varying the separating distance (d) between the arms (2), as seen in Figures 1 and 7, varying the relative height between the arms (2) so that one arm is arranged higher than the other (Figures 4 and 6) or both arms are arranged at the same height (Figure 8), and folding the arms (2) so that they are parallel to the vertical surface or wall on which the hanger is fixed, as seen in Figures 11 and 12.

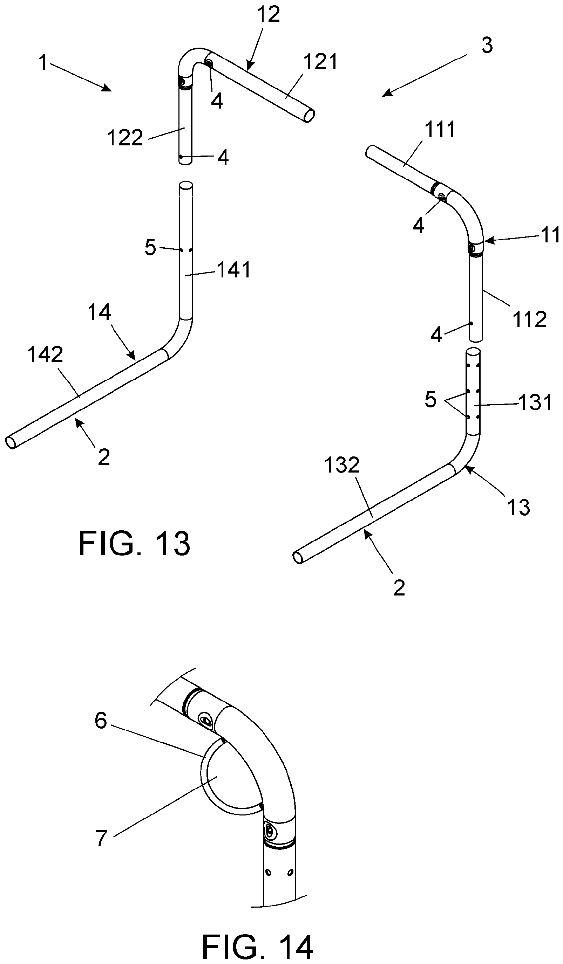

To that end, said set of sections of the structure (1) is preferably formed, as seen in Figure 13, by four L-shaped bent tube sections, two upper sections, a right section (11) and another left section (12), taken from the observer's viewpoint, that are attached together forming the inverted U-shaped central attachment segment (3) by means of respective right horizontal tube (111) and left horizontal tube (121) that have different diameters and are coupled together with a telescopic movement, and two lower sections, a right section (13) and another left section (14), that are in turn formed by respective upper vertical tubes (131, 141) and perpendicular tubes (132) and (142) determining the respective arms (2), the two lower sections being attached to each of the upper sections (11, 12) in the lower portion thereof by means of respective upper vertical tubes (131) and (141) in each section being attached to corresponding lower vertical tubes (112) and (122) of the upper sections, which tubes likewise also have different diameters to be fitted together with a telescopic movement.

Preferably, to fix the two upper sections (11, 12) together between their right horizontal tube (111) and left horizontal tube (121) so as to establish the separation between the arms (2), there are provided in said tubes (111, 121) holes (4) perpendicular to the surface of installation for the insertion of screws that go through said tubes and are fixed to a wall.

Preferably, the respective fixing of each lower right section (13) and lower left section (14) with the corresponding upper right section (11) and upper left section (12) is performed by means of a snap-closure mechanical system formed by lugs (5) provided in the inner tubes which fit into holes (4) of the outer tubes.

Additionally, as seen in Figures 1 and 14 the structure (1) has fixing means (6), for example a arch-shaped metal rod, or a flat or another element defining a through cavity (7) for inserting an anti-theft security system.

Having sufficiently described the nature of the present invention as well as the way of putting it into practice, it is not considered necessary to further describe the invention so that one skilled in the art can comprehend the scope thereof and the advantages derived from it, stating that within its essential nature, the present invention could be carried out to practice in other embodiments differing in detail from that indicated by way of example, and such embodiments would also be granted the protection that is sought provided that the fundamental principle thereof is not altered, changed, or modified.

## Claims

1. A hanger having a foldable structure and a variable position, configured from a tubular structure (1) intended for being fixed on a wall or another vertical surface, with two supporting arms (2) which, when attached together by means of an inverted U-shaped central segment (3) with the hanger in the usage position, are perpendicular to said vertical surface and parallel to one another, **characterized by** the fact that said structure (1) is formed by a set of sections (11, 12, 13, 14) that can be coupled to one another with linear and rotational movement in a variable position so as to vary the separating distance (d) between the arms (2), the relative height between the arms (2) so that one arm is arranged higher than the other or both arms are arranged at the same height, and folding the arms (2) so that they are parallel to the vertical surface or wall on which the hanger is fixed.

2. The hanger having a foldable structure and a variable position according to claim 1, **characterized in that** said set of sections of the structure (1) comprises four bent L-shaped tube sections, two upper sections, a right section (11) and another left section (12), that are attached together forming the inverted U-shaped central attachment segment (3) by means of respective right horizontal tube (111) and left horizontal tube (121) that have different diameters and are coupled together with a telescopic movement, and two lower sections, a right section (13) and another left section (14), that are in turn formed by respective upper vertical tubes (131, 141) and perpendicular tubes (132) and (142) determining the respective arms (2), the two lower sections being attached to each of the upper sections (11, 12) in the lower portion thereof by means of respective upper vertical tubes (131) and (141) in each section being attached to corresponding lower vertical tubes (112) and (122) of the upper sections, which tubes likewise also have different diameters to be fitted together with a telescopic movement.

3. The hanger having a foldable structure and a variable position according to claim 2, **characterized in that** to fix the two upper sections (11, 12) together between their right horizontal tube (111) and left horizontal tube (121) so as to establish the separation between the arms (2), there are provided in said tubes (111, 121) holes (4) perpendicular to the surface of installation for the insertion of screws that go through said tubes and are fixed to a wall.

4. The hanger having a foldable structure and a variable position according to claim 2 or 3, **characterized in that** the respective fixing of each lower right section (13) and lower left section (14) with the corresponding upper right section (11) and upper left section (12) is performed by means of a snap-closure mechanical system formed by lugs (5) provided in the inner tubes which fit into holes (4) of the outer tubes.

5. The hanger having a foldable structure and a variable position according to any of claims 1 to 4, **characterized in that** the structure (1) has fixing means (6), such as an arch-shaped metal rod, or a flat defining a through cavity (7) for inserting a anti-theft security system.
